# EUROPEAN PATENT APPLICATION

(11) **EP 2 073 479 A1**
(43) Date of publication of application: **24.06.2009**
(21) Application number: 08165450.1
(22) Date of filing: 30.09.2008
(51) Int. Cl.: H04L 29/06, H04W 36/14

(54) **Method and system for call continuity**

(30) Priority: 21.12.2007 CN 200710301514
(71) Applicant: Huawei Technologies Co., Ltd., Longgang District, Shenzhen Guangdong 518129 (CN)
(72) Inventor: Cao, Xiaoyan, Shenzhen Guangdong 518129 (CN); Li, Deqiang, Shenzhen Guangdong 518129 (CN)
(74) Representative: Hengelhaupt, Jürgen

(57) **Abstract**

The present disclosure discloses a method and system for call continuity. A method for call continuity includes: sending an anchor request according to a received trigger request of a call, receiving routing information returned in response to the anchor request, extracting an IP Multimedia Routing Number (IMRN) from the routing information, and routing the call to a called terminal according to the IMRN. With the present disclosure, an IMRN is extracted from routing information and a call is routed to a called terminal according to the IMRN. Thus call continuity is implemented between a Circuit Switched (CS) domain and an IP Multimedia Subsystem (IMS) domain through interworking between a Service Control Point (SCP) and an Application Server (AS).

## Description

### FIELD OF THE INVENTION

The present disclosure relates to mobile communication technologies, and in particular, to a method and system for call continuity between a Circuit Switched (CS) domain and an IP Multimedia Subsystem (IMS) domain.

### BACKGROUND

The IMS technology has emerged in recent years for network convergence so that service features are independent of the access network. At present, most IMS operators are traditional network operators who have 2G and 3G Public Land Mobile Networks (PLMNs) in the CS domain. In addition, IMS deployment is done step by step. It is rare that all IMS services are provided in one step. Therefore, for the use of previous investments and the step-by-step development of IMS, it is necessary to provide seamless handover between the CS and IMS domains. The Voice Call Continuity (VCC)-based IP Multimedia Subsystem (IMS) solution refers to the continuity of calls between the CS domain and the IMS domain. VCC needs to comply with 3GPP TR 23.806, TR23.206 and TR 24.206 and requires that terminals support the VCC application defined in these protocols.

IMS forwarding can be set in the Home Location Register (HLR) in the CS domain; calls of CS users are forwarded to the IMS domain so that the calls can be addressed to an IMS network. However, the inventor of the present disclosure finds that because a mobile network limits the times of forwardings, if a call has already been forwarded once, this method may not work. In addition, when a terminal supports both IMS and CS, it is impossible to decide to which network a call is addressed to according to rules preset by an operator or user flexibly.

Different number segment may be dedicated to different IMS users so that the CS domain can connect a call to the IMS domain according to the number of the called terminal. This method does not require interworking between the service side and the HLR. However, the inventor of the present disclosure finds that this method requires separation of IMS user numbers from CS user numbers for the same user, which is not good for operating. In addition, when a terminal supports both IMS solution and CS solution, it is impossible to decide to which network a call is addressed to according to rules preset by an operator or user flexibly.

### SUMMARY

Exemplary embodiments of the invention provide a method and system for call continuity between a Circuit Switched (CS) domain and an IP Multimedia Subsystem (IMS) domain by means of interworking between a Service Control Point (SCP) and an Application Server (AS).

An embodiment provides a method for call continuity between a CS domain and an IMS domain includes:

sending an anchor request according to a received trigger request of a call;

receiving routing information returned in response to the anchor request;

extracting an IP Multimedia Routing Number (IMRN) from the routing information; and

routing the call to a called terminal according to the IMRN.

An embodiment provides a system for call continuity between a CS domain and an IMS domain includes an Application Server (AS) and a Service Control Point (SCP), wherein:

the AS is configured to receive a request sent by the SCP, and when the AS determines that anchor is necessary, send routing information to the SCP to instruct the SCP to perform a route switchover;

the SCP is configured to receive a call and a trigger request of the call, send a request to the AS and receive routing information sent by the AS, and route the call according to the routing information.

An embodiment provides a Service Control Point (SCP) for call continuity between a CS domain and an IMS domain includes:

a requesting module, configured to send an anchor request according to a received trigger request of a call;

a first receiving module, configured to receive routing information returned in response to the anchor request;

an extracting module, configured to extract an IP Multimedia Routing Number (IMRN) from the routing information; and

a first routing apparatus, configured to route the call to a called terminal according to the IMRN.

An embodiment provides an application Server (AS) for call continuity between a CS domain and an IMS domain includes:

a determining module, configured to determine whether a called terminal is in the IMS domain, and determine to anchor if the called terminal is in the IMS domain, or determine not to anchor if the called terminal is not in the IMS domain;

a first sending module, configured to send routing information to a Service Control Point (SCP) when the determining module determines to anchor; and/or

a second sending module, configured to send to the SCP a message which indicates routing the call to the called terminal according to the called number when the determining module determines not to anchor.

According to exemplary embodiments of the invention, the method, system and apparatus for call continuity between a CS domain and an IMS domain implement interworking between a Service Control Point (SCP) and a Voice Call Continuity-Application Server (VCC-AS) for roaming and handover between the CS domain and the IMS domain by extending standard signaling parameters. For example, the method, system and apparatus of the present disclosure extract an IMRN from routing information and route a call to a called terminal according to the IMRN, and implement the interworking between the SCP and the AS. Embodiments of the invention make few changes to SCP services so that smooth migration is feasible, enabling call continuity between the CS domain and the IMS domain.

### BRIEF DESCRIPTION OF THE DRAWING(S)

The drawings described herein are for illustration purposes only and are not intended to limit the scope of the present disclosure in any way.

Figure 1 is a flowchart of the method for call continuity between a CS domain and an IMS domain according to an embodiment of the invention;

Figure 2 is a flowchart of the method for call continuity between a CS domain and an IMS domain according to another embodiment of the invention;

Figure 3 is a flowchart of the method for call continuity between a CS domain and an IMS domain according to another embodiment of the invention;

Figure 4 is a simple schematic diagram showing a system for call continuity between a CS domain and an IMS domain according to an embodiment of the invention; and

Figure 5 is a simple schematic diagram showing a system for call continuity between a CS domain and an IMS domain according to another embodiment of the invention.

### DETAILED DESCRIPTION

The following description is merely exemplary in nature and is not intended to limit the present disclosure, application, or uses.

Reference throughout this specification to "one embodiment," "an embodiment," "specific embodiment," or the like in the singular or plural form means that one or more particular features, structures, or characteristics described in connection with an embodiment is included in at least one embodiment of the present disclosure. Thus, the appearances of the phrases "in one embodiment" or "in an embodiment," "in a specific embodiment," or the like in the singular or plural form in various places throughout this specification are not necessarily all referring to the same embodiment. Furthermore, the particular features, structures, or characteristics may be combined in any suitable manner in one or more embodiments.

Embodiments of the invention implement interworking between a Service Control Point (SCP) and a Voice Call Continuity-Application Server (VCC-AS) so as to achieve roaming and handover between a Circuit Switched (CS) domain and an IP Multimedia Subsystem (IMS) domain by extending standard signaling parameters such as MAP SRI. For example, the Send Routing Information (SRI) message returned by the VCC-AS to the SCP is extended with an IP Multimedia Routing Number (IMRN). In subsequent processing, the SCP and VCC-AS will interwork with each other to realize roaming and handover of users such as an intelligent network prepaid user between a CS domain and an IMS domain. Thus, smooth migration of traditional SCP services can be implemented for calling continuity between the CS domain and the IMS domain.

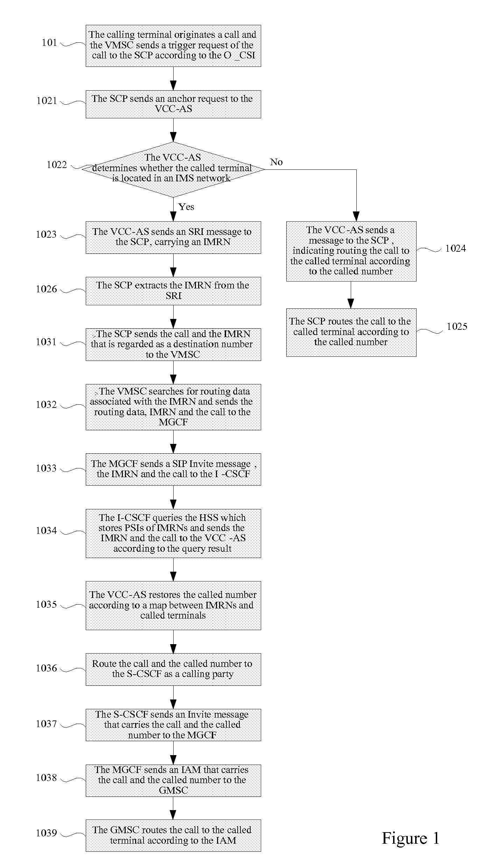

Figure 1 is a flowchart of the method for call continuity between a CS domain and an IMS domain according to an embodiment of the invention, wherein a calling terminal initiates an anchor request in the CS domain, requesting call continuity from the CS domain to the IMS domain. The flowchart may include the following steps:

Step 101: A calling terminal originates a call; a Visitor Mobile Switching Center (VMSC) sends a trigger request of the call to an SCP according to Originating CAMEL Subscription Information (O_CSI), the O_CSI is obtained by the VMSC, for example, at the time of location update.

Step 102: The SCP receives the trigger request of the call and requests an IMRN from the VCC-AS according to the VCC right of the calling terminal. This step may further include:

Step 1021: The SCP sends an anchor request to the VCC-AS. The anchor request carries or encapsules a called number, a calling number, bearer information, location information and trigger information of the calling party.

Step 1022: The VCC-AS determines whether the called terminal is in an IMS domain according to a judgment policy. If the called terminal is in an IMS domain, step 1023 proceeds; otherwise, step 1024 proceeds.

The judgment policy may include information encapsulated in the anchor request and policy information configured at the VCC-AS.

Step 1023: The VCC-AS sends an SRI message to the SCP and then step 1026 proceeds. The SRI message carries IMRN information.

Step 1024: The VCC-AS sends a message to the SCP, indicating routing the call to the called terminal according to the called number, and then step 1025 proceeds.

The SCP routes the call to the called terminal according to the called number.

The SCP extracts IMRN information from the SRI message. The process of requesting IMRN information completes.

The SCP routes the call to the called terminal according to the IMRN. Step 103 may further include:

Step 1031: The SCP sends the call and the IMRN that is regarded as a destination number to the VMSC.

Step 1032: The VMSC stores routing data of IMRNs. The VMSC searches for routing data associated with the IMRN and sends the routing data, IMRN and the call to a Media Gateway Control Function (MGCF).

Step 1033: The MGCF establishes a Session Initiation Protocol (SIP) Invite message according to the routing data and sends the SIP Invite message, IMRN and the call to an Interrogating Call Session Control Function (I-CSCF) to establish a communication connection with a user in the IMS domain.

Step 1034: According to the SIP Invite message, the I-CSCF queries a Home Subscribe Server (HSS), which stores Public Service Identities (PSIs) of IMRNs. According to the query result, the I-CSCF sends the IMRN and the call to the VCC-AS for processing.

Step 1035: The VCC-AS restores the called number according to a matching information between IMRNs and called terminals, and routes the call according to the restored called number.

The step of routing the call according to the restored called number may further include:

Step 1036: Route the call and the called number to a Serving Call Session Control Function (S-CSCF) as a calling party.

Step 1037: The S-CSCF sends an Invite message that carries the call and the called number to the MGCF.

Step 1038: The MGCF sends an Initial Address Message (IAM) that carries the call and the called number to a Gateway Mobile Switching Center (GMSC) according to the Invite message that carries the call and the called number.

Step 1039: The GMSC routes the call to the called terminal according to the IAM that carries the call and the called number.

According to an exemplary embodiment of the invention, the standard Mobile Application Part (MAP) SRI message is extended with an IMRN so that a prepaid user may roam and be handed or switched over between a CS domain and an IMS domain through interworking between the SCP and the VCC-AS. The SCP determines whether it is necessary to hand the called terminal over to the IMS domain according to the anchor request returned by the VCC-AS and if necessary, assigns an IMRN to the SCP, requesting the SCP to send the IMRN to the VMSC as a destination number; or if the handover is unnecessary, the SCP sends a Continue message to continue the call by using the original called number. The SCP may decide whether to continue the call directly or route the call to the IMS domain according to the anchor policy returned in the SRI message by the VCC-AS. The SCP may interwork with the VCC-AS to determine whether the user is in the CS domain or the IMS domain so as to apply different charging policies to the prepaid user.

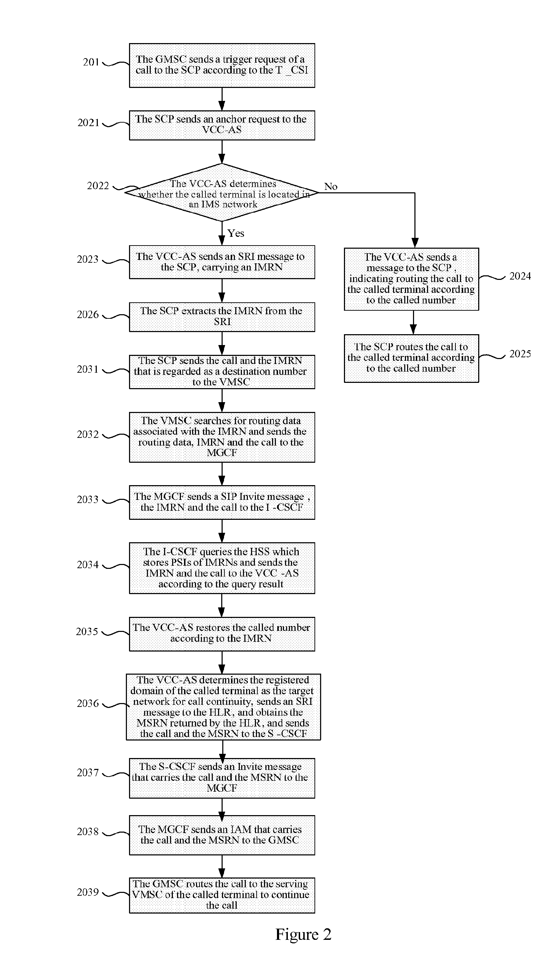

Figure 2 is a flowchart of the method for call continuity between a CS domain and an IMS domain according to another embodiment of the invention, where a called terminal initiates an anchor request, requesting call continuity from the CS domain to the IMS domain and the called party is both a CS user and an IMS user. The flowchart may include the following steps:

Step 201: A GMSC sends a trigger request of a call to an SCP according to the Terminating CAMEL Subscription Information (T_CSI).

Step 202: The SCP receives the trigger request of the call and requests an IMRN from the VCC-AS according to the VCC right of the calling terminal. This step may further include:

Step 2021: The SCP sends an anchor request to the VCC-AS. The anchor request carries a called number, a calling number, bearer information, location information and trigger information of the called party.

Step 2022: The VCC-AS determines whether the called terminal is in an IMS domain according to a judgment policy. If the called terminal is in an IMS domain, step 2023 proceeds; otherwise, step 2024 proceeds.

The judgment policy may include information encapsulated in the anchor request and policy information configured at the VCC-AS.

Step 2023: The VCC-AS sends an SRI message to the SCP and then step 2026 proceeds. The SRI message carries IMRN information.

Step 2024: The VCC-AS sends a message to the SCP, indicating routing the call to the called terminal according to the called number, and then step 2025 proceeds.

Step 2025: The SCP routes the call to the called terminal according to the called number.

Step 2026: The SCP extracts IMRN information from the SRI message. The process of requesting IMRN information completes.

Step 203: The SCP routes the call to the called terminal according to the IMRN. Step 203 may further include:

Step 2031: The SCP sends the call and the IMRN that is regarded as a destination number to the VMSC.

Step 2032: The VMSC stores routing data of IMRNs. The VMSC searches for routing data associated with the IMRN and sends the routing data, IMRN and the call to an MGCF.

Step 2033: The MGCF establishes a SIP Invite message according to the routing data and sends the SIP Invite message, IMRN and the call to the I-CSCF to establish a communication connection with a user in the IMS domain.

Step 2034: According to the SIP Invite message, the I-CSCF queries the HSS, which stores PSIs ofIMRNs. According to the query result, the I-CSCF sends the IMRN and the call to the VCC-AS for processing.

Step 2035: The VCC-AS restores the called number according to the IMRN and routes the call according to the restored called number.

The step of routing the call according to the restored called number may further include:

Step 2036: When the called user is both a CS user and an IMS user, to continue the call to the serving network of the called terminal, the VCC-AS needs to make a network selection. When the called terminal is registered in only one domain, the registered domain is selected to continue the call. When the called terminal is registered in both domains, one domain is selected according to the operator's policy or user's selection or pre-configuration. The VCC-AS queries SRI signaling according to the called number, sends an SRI message to the serving HLR of the called terminal, obtains a Mobile Station Roaming Number (MSRN) returned by the HLR, and sends the call and the MSRN to the S-CSCF.

Step 2037: The S-CSCF sends an Invite message that carries the call and the MSRN to the MGCF.

Step 2038: The MGCF sends an IAM that carries the call and the MSRN to the GMSC according to the Invite message that carries the call and the MSRN.

Step 2039: The GMSC routes the call to the serving VMSC of the called party to continue the call.

In the above embodiments of the invention, the standard MAP SRI message is extended with an IMRN parameter, so that a prepaid user may roam and be handed over or switched over between the CS domain and the IMS domain through interworking between the SCP and the VCC-AS. In addition, the SCP may determine whether the called terminal is located in the IMS domain according to the anchor request returned by the VCC-AS so as to apply different charging policies to the prepaid user.

A method for call continuity between a CS domain and an IMS domain according to another exemplary embodiment of the invention may include the following:

An SCP sends an anchor request to a VCC-AS according to a received trigger request of a call; the SCP receives routing information returned by the VCC-AS in response to the anchor request; the SCP extracts an IMRN from the routing information; and the SCP routes the call to the called terminal.

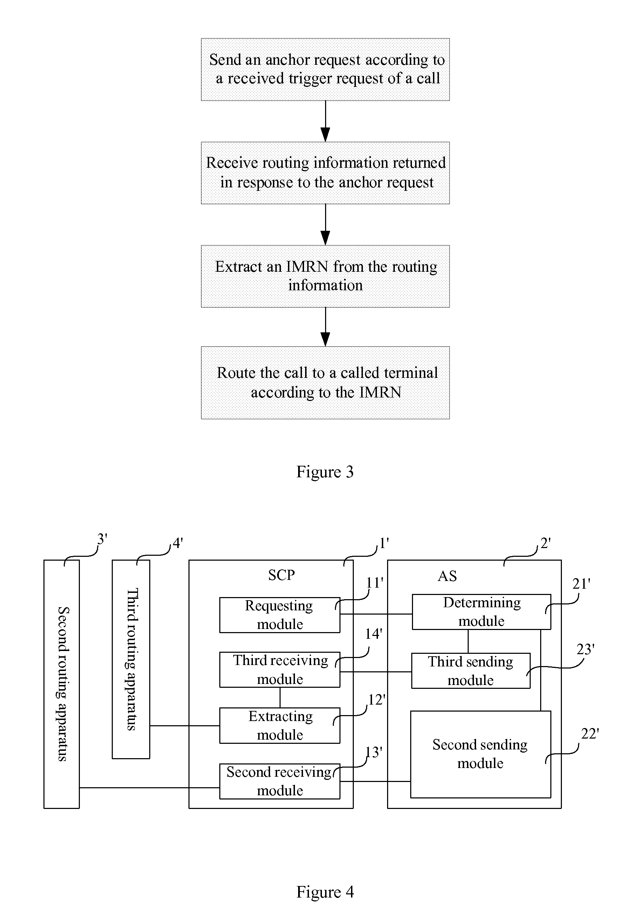

As shown in Figure 3, a method for call continuity between different service domains according to another exemplary embodiment of the invention may include:

sending an anchor request according to a received trigger request of a call;

receiving routing information returned in response to the anchor request;

extracting an IP Multimedia Routing Number (IMRN) from the routing information; and

routing the call to a called terminal according to the IMRN.

The above method for call continuity is applicable to call continuity between the CS domain and the IMS domain. Those skilled in the art understand that the method in the above embodiments may also be applied to the handover of calls between other similar communication service domains.

As shown in Figure 4, a system for call continuity between a CS domain and an IMS domain according to an embodiment of the invention may include a Service Control Point (SCP) 1', an Application Server (AS) 2' and a first routing apparatus.

The SCP 1' may include: a requesting module 11', configured to send an anchor request according to a received trigger request of a call; a first receiving module, configured to receive routing information returned in response to the anchor request; and an extracting module 12', configured to extract an IP Multimedia Routing Number (IMRN) from the routing information.

The AS 2' may include a first sending module. The first sending module is configured to send routing information according to the anchor request.

The first routing apparatus is configured to route the call to a called terminal according to the IMRN. The first routing apparatus may be configured on the SCP 1' or the AS 2'.

The AS 2' may further include: a determining module 21', configured to determine whether the called terminal is located in the IMS domain; and a second sending module 22', configured to send a message, indicating routing the call to the called terminal according to the called number, when the determining module 21' determines that the called terminal is not located in the IMS domain.

The first sending module may be specifically a third sending module 23', configured to send routing information according to the anchor request when the determining module 21' determines that the called terminal is located in the IMS domain.

The SCP 1' may further include a second receiving module 13, configured to receive the message that indicates routing the call to the called terminal according to the called number when it is determined that the called terminal is not located in the IMS domain.

The first receiving module may be specifically a third receiving module 14', configured to receive routing information returned in response to the anchor request when it is determined that the called terminal is located in the IMS domain.

The system in the embodiment of the invention may further include a second routing apparatus 3', configured to route the call to the called terminal according to the called number when it is determined that the called terminal is not located in the IMS domain.

The first routing apparatus may be specifically a third routing apparatus 4', configured to route the call to the called terminal according to the IMRN when it is determined that the called terminal is located in the IMS domain.

In this embodiment of the invention, the extracting module 12' extracts an IMRN from the routing information and the first routing apparatus routes the call to the called terminal according to the IMRN so that a prepaid user may roam and be handed over between the CS domain and the IMS domain through interworking between the SCP and the VCC-AS.

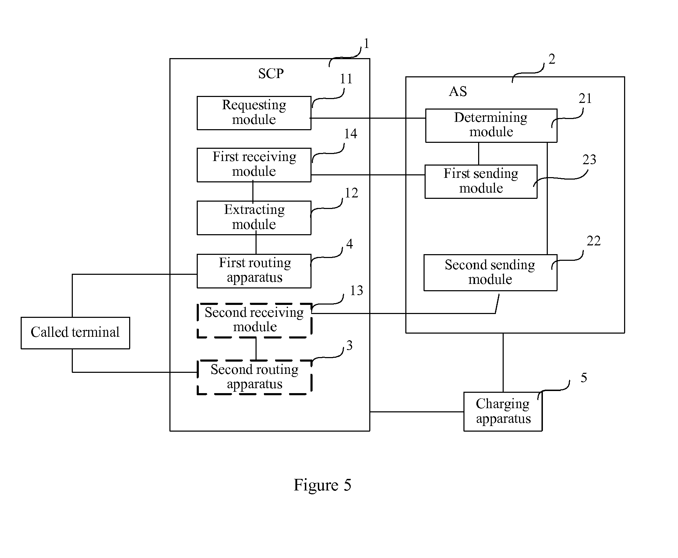

As shown in Figure 5, a system for call continuity between a CS domain and an IMS domain according to another exemplary embodiment of the invention may include:

an Application Server (AS) 2 and a Service Control Point (SCP) 1, wherein the AS 2 is configured to receive a request sent by the SCP 1, and when it is determined that anchor is necessary, send routing information to the SCP 1 to instruct the SCP 1 to perform a route handover; the SCP 1 is configured to receive a call and the trigger request of the call, send a request to the AS 2, receive routing information returned by the AS 2, and route the call according to the routing information.

The routing information may carry an IMRN. The SCP 1 is further configured to extract the IMRN from the routing information and route the call to the called terminal according to the IMRN.

The AS 2 is further configured to determine whether it is necessary to hand over the called terminal to another domain, that is, whether the called terminal moves from the CS domain to the IMS domain. When the called terminal is located in the IMS domain, the AS 2 determines that anchor is necessary, that is, the called terminal needs a handover between domains. When the called terminal is not located in the IMS domain, that is, the called terminal does not need a handover between domains, the AS 2 sends a message to the SCP 1, indicating routing the call to the called terminal according to the called number.

For the purpose of charging, the above embodiment of a system may further include a charging apparatus 5, configured to perform charging according to the charging policy of the network where the charged terminal is located. The charging policy may be preset, or selected by the user, or agreed by the user and the operator.

As shown in Figure 5, a Service Control Point (SCP) 1 for call continuity between a CS domain and an IMS domain according to an embodiment of the invention may include:

a requesting module 11, configured to send an anchor request according to a received trigger request of a call. The call and the trigger request of the call may be originated from a user terminal, for example, a calling user terminal; the requesting module 11 sends an anchor request to an Application Server (AS) 2 upon receipt of the call and the trigger request of the call;

a first receiving module 14, configured to receive routing information returned in response to the anchor request;

an extracting module 12, configured to extract an IP Multimedia Routing Number (IMRN) from the routing information; and

a first routing apparatus 4, configured to route the call to a called terminal according to the IMRN.

The SCP may further include: a second receiving module 13, configured to receive a message which indicates routing the call to the called terminal according to the called number; and a second routing apparatus 3, configured to route the call to the called terminal according to the called number.

As shown in Figure 5, an Application Server (AS) 2 for call continuity between a CS domain and an IMS domain according to an exemplary embodiment of the invention may include:

a determining module 21, configured to determine whether a called terminal is located in the IMS domain and determine that anchor is necessary if the called terminal is in the IMS domain or else anchor is unnecessary;

a first sending module 23, configured to send routing information to a Service Control Point (SCP) 1 when the determining module 21 determines that anchor is necessary; and/or

a second sending module 22, configured to send to the SCP 1 a message which indicates routing the call to the called terminal according to the called number when the determining module 21 determines that anchor is unnecessary.

Though illustration and description of the present disclosure have been given with reference to preferred embodiments thereof, it should be appreciated by persons of ordinary skill in the art that various changes in forms and details can be made without deviation from the scope of this disclosure, which are defined by the appended claims.

## Claims

1. A method for call continuity between a CS domain and an IMS domain comprising:
sending an anchor request according to a received trigger request of a call;
receiving routing information returned in response to the anchor request;
extracting an IP Multimedia Routing Number, IMRN, from the routing information; and
routing the call to a called terminal according to the IMRN.

2. The method of claim 1, wherein the anchor request further comprises: a called number, a calling number, bearer information, location information and trigger information of a calling party.

3. The method of claim 2, comprising, before routing information returned, determining whether the called party is in the IMS domain; when the called terminal is in the IMS domain, returning the routing information.

4. The method of claim 3, further comprising, determining whether the called party is in the IMS domain according to the information carried in the anchor request and preset policy.

5. The method of claim 3, comprising, when the called terminal isn't in the IMS domain, indicating routing the call to the called terminal according to the called number, and routing the call to the called terminal according to the called number.

6. The method of any one of claims 1 to 5, wherein, before sending the anchor request, the calling terminal originates a call, and then sends the anchor request according to an Originating CAMEL Subscription Information, O_CSI.

7. The method of claim 6, further comprising:
sending the call and the IMRN to a Visitor Mobile Switching Center, VMSC; wherein,
the VMSC searches for routing data associated with the IMRN and sends the routing data, the IMRN and the call to a Media Gateway Control Function, MGCF;
the MGCF establishes a Session Initiation Protocol, SIP, Invite message according to the routing data and sends the SIP Invite message, IMRN and the call to an Interrogating Call Session Control Function, I-CSCF;
the I-CSCF queries a Home Subscribe Server, HSS, according to the SIP Invite message, to obtain a Public Service Identities, PSI; and according to the query result, the I-CSCF sends the IMRN and the call to a Voice Call Continuity-Application Server, VCC-AS;
the VCC-AS restores the called number according to the IMRN, and routes the call according to the restored called number.

8. The method of claim 7, wherein,
the VCC-AS routes the call and the called number to a Serving Call Session Control Function, S-CSCF;
the S-CSCF sends an Invite message that carries the call and the called number to the MGCF;
the MGCF sends an Initial Address Message, IAM, that carries the call and the called number to a Gateway Mobile Switching Center, GMSC, according to the Invite message that carries the call and the called number; and
the GMSC routes the call to the called terminal according to the IAM that carries the call and the called number.

9. The method of any one of claims 1 to 5, wherein,
the received trigger request of a call is received from a VMSC according to a Terminating CAMEL Subscription Information, T_CSI.

10. The method of claim 9, wherein routing the call to a called terminal according to the IMRN, further comprises:
sending the call and the IMRN to the VMSC; wherein,
the VMSC searches for routing data associated with the IMRN, and sends the routing data, IMRN and the call to a MGCF;
the MGCF establishes a Session Initiation Protocol, SIP, Invite message according to the routing data and sends the SIP Invite message, IMRN and the call to an Interrogating Call Session Control Function, I-CSCF;
the I-CSCF queries a Home Subscribe Server, HSS, according to the SIP Invite message, to obtain a Public Service Identities, PSI; and according to the query result, the I-CSCF sends the IMRN and the call to a Voice Call Continuity-Application Server, VCC-AS; and
the VCC-AS restores the called number according to the IMRN, and routes the call according to the restored called number.

11. The method of claim 10, wherein,
when the called terminal is registered in a call continuity network, the VCC-AS searches for routing information, sends the routing information to HLR of the called terminal, obtains a MSRN returned by the HLR, and sends the MSRN and the call to the S-CSCF;
the S-CSCF sends an Invite message that carries the call and the MSRN to the MGCF;
the MGCF sends an IAM that carries the call and the MSRN to the GMSC according to the Invite message that carries the call and the MSRN; and
the GMSC routes the call to the serving VMSC of the called party to continue the call.

12. The method of claim 11, wherein when the registered domain of the called terminal is CS and IMS, the VCC-AS determines the called terminal is in the call continuity network; the VCC-AS determines the call continuity network according to the operator's policy or user selection.

13. The method of any one of claims 1 to 12, wherein the IMRN is carried in the MAP SRI message sent to the SCP.

14. A system for call continuity between a CS domain and an IMS domain comprising an Application Server, AS (2, 2' ), and a Service Control Point, SCP (1, 1'), wherein,
the AS (2, 2') is configured to receive a request sent by the SCP (1, 1'), and when the AS (2, 2') determines that anchor is necessary, send routing information to the SCP (1, 1') to instruct the SCP (1, 1') to perform a route switchover; and
the SCP (1, 1') is configured to receive a call and a trigger request of the call, send a request to the AS (2, 2') and receive routing information sent by the AS (2, 2'), and route the call according to the routing information.

15. The system of claim 14, wherein the routing information carries an IMRN; the SCP (1, 1') is further configured to extract the IMRN from the routing information, and route the call according to the IMRN.

16. The system of claim 14 or 15, wherein the AS (2, 2') is further configured to determine whether a called terminal is in the IMS domain; when the called terminal is in the IMS domain, the AS (2, 2') determines the anchor is necessary; and
when the called terminal isn't in the IMS domain, the AS (2, 2') instructs the SCP (1, 1')) to route the call to the called terminal according to the called number.

17. The system of claim 16, wherein the system further comprises a charging apparatus (5), configured to perform charging according to a charging policy of a network where a charged terminal is located.

18. A Service Control Point, SCP (1, 1'), for call continuity between a CS domain and an IMS domain, comprising:
a requesting module (11, 11'), configured to send an anchor request according to a received trigger request of a call;
a first receiving module (14, 14'), configured to receive routing information returned in response to the anchor request;
an extracting module (12, 12' ), configured to extract an IP Multimedia Routing Number, IMRN, from the routing information; and
a first routing apparatus (4, 4'), configured to route the call to a called terminal according to the IMRN.

19. The SCP of claim 18, wherein the SCP (1, 1') further comprises a second receiving module (13, 13'), configured to receive a message which indicates routing the call to the called terminal according to a called number; and
a second routing apparatus (3, 3'), configured to route the call to the called terminal according to the called number.

20. An Application Server, AS (2, 2'), for call continuity between a CS domain and an IMS domain comprising:
a determining module (21, 21'), configured to determine whether a called terminal is in the IMS domain; if the called terminal is in the IMS domain, determining to anchor; if the called terminal is not in the IMS domain, determining not to anchor;
a first sending module (23, 23'), configured to send routing information to a Service Control Point,SCP (1, 1' ), when the determining module determines to anchor; and/or
a second sending module (22, 22'), configured to send to the SCP a message which indicates routing the call to the called terminal according to a called number when the determining module determines not to anchor.
